# EUROPEAN PATENT SPECIFICATION

(11) **EP 1 228 643 B1**
(45) Date of publication and mention of the grant of the patent: **06.04.2005**
(21) Application number: 00993068.6
(22) Date of filing: 23.10.2000
(51) Int. Cl.: H04N 7/16

(54) **INTERACTIVE TELEVISION PROGRAM GUIDE SYSTEM WITH LISTINGS GROUPS**
INTERAKTIVES FERNSEHPROGRAMMFÜHRERSYSTEM MIT GRUPPENLISTEN
SYSTEME GUIDE DE PROGRAMME DE TELEVISION INTERACTIF AVEC GROUPES DE LISTES

(30) Priority: 10.11.1999 US 164646 P; 18.10.2000 US 691965
(43) Date of publication of application: 07.08.2002
(73) Proprietor: United Video Properties, Inc., Tulsa, OK 74136 (US)
(72) Inventor: THOMAS, William, L., Bixby, OK 74008 (US); ELLIS, Michael, D., Boulder, CO 80304 (US)
(74) Representative: Hale, Peter
(86) International application number: PCT/US2000/041434
(87) International publication number: WO 2001/035662

(56) References cited:
- EP-A- 0 924 927
- EP-A- 0 944 253
- WO-A-98/26584
- WO-A-99/04561
- WO-A-99/56473
- US-A- 5 940 073

## Description

### Background of the Invention

This invention relates to interactive television program guides, and more particularly, to an interactive television program guide system with television listings groups.

Interactive television program guides implemented on set-top boxes allow users to view television program listings on their televisions. Such program guides allow users to view television program listings in different display formats and to perform various other functions. For example, a user may instruct the program guide to display a channel or time-ordered grid of current program listings.

Many program guides allow a user to view television programs in a predefined genre. The program guide may display listings of programs that relate to a desired programming genre such as movies, comedies, baseball, etc. However, there is often a desire to find a group of listings that may be related in ways that change over time and are difficult to predict in advance, or that would create an inordinate number of genre categories.

Many program guides also display advertisements for particular television programs, channels, or networks (see e.g. US-A-5 940 073). However, there is no way to advertise an arbitrary group of programs which may be presented at diverse times on a multitude of channels.

It is therefore an object of the present invention to provide an interactive television program guide system that groups television programs that are related in arbitrary ways.

It is also an object of the present invention to provide an interactive television program guide system that provides the user with an opportunity to set a reminder or to record programs that are related in arbitrary ways.

It is also an object of the present invention to provide an interactive television program guide system that provides advertisements for groups of programs that are related in arbitrary ways.

### Summary of the Invention

These and other objects of the invention are accomplished in accordance with the principles of the present invention, which is set out in the claims, by providing a system in which an interactive television program guide groups programs related in arbitrary ways. For example, sponsors may decide to advertise an arbitrary group of programs that are related in ways that are difficult to predict in advance or that change over time. The program guide of the present invention selects television programs to be part of the sponsored group according to criteria provided by the sponsor.

The program guide system may display a listing of television programs that are selected to be in the sponsored group. Any of the programs that have expired (e.g., that have ended or are no longer purchasable) are not displayed as part of the listing. The program guide system may also display an advertisement for the group of programs. The program guide system of the present invention may also provide an information screen for the groups of programs. The listings or information screen may be displayed when the user selects an interactive option or advertisement for the group of programs.

The listings groups may be constantly updated. As programs are dropped from the group, the program guide may add additional programs, so that the listing group is always fresh and always contains about the same number of programs. If desired a listing group may disappear as an option within the program guide system when the last program in the group has ended or at some preselected time prior to that.

The program guide system of the present invention may allow the user to record all of the programs in the group or bookmark the group so that it can be easily accessed in the future. The program guide may allow the user to set reminders for all of the programs in the group. The program guide may add the common attributes of the programs in the group to a selected user profile. The program guide may allow the user to search for programs in a program group that are not displayed in the group's listing.

### Brief Description of the Drawings

FIG. 1A is a system diagram of an interactive television program guide system with listings groups in accordance with the present invention.
FIG. 1B is a diagram of illustrative user television equipment in accordance with the present invention.
FIG. 1C is a diagram of additional illustrative user television equipment in accordance with the present invention.
FIG. 1D is a diagram of illustrative user computer equipment in accordance with the present invention.
FIG. 1E is a generalized diagram of illustrative user equipment in accordance with the present invention.
FIG. 2 is an illustrative interactive main menu television display screen in accordance with the present invention.
FIG. 3 is an illustrative interactive television display screen with a menu of program listings groups in accordance with the present invention.
FIG. 4 is an illustrative interactive television display screen with listings of a group of programs in accordance with the present invention.
FIG. 5 is an illustrative interactive television information display screen of a program listings group in accordance with the present invention.
FIG. 6 is another illustrative interactive television display screen with listings of a group of programs in accordance with the present invention.
FIG. 7 is an illustrative interactive television program information display screen with access to listings group features in accordance with the present invention.
FIG. 8 is an illustrative interactive television display screen with listings group search features in accordance with the present invention.
FIG. 9 is an illustrative interactive television display screen with an interactive advertisement accordance with the present invention.
FIG. 10 is an illustrative interactive television display screen with listings of a group of programs in accordance with the present invention.
FIG. 11 is a flow chart for a group listings process in accordance with the present invention.

### Detailed Description of the Preferred Embodiment

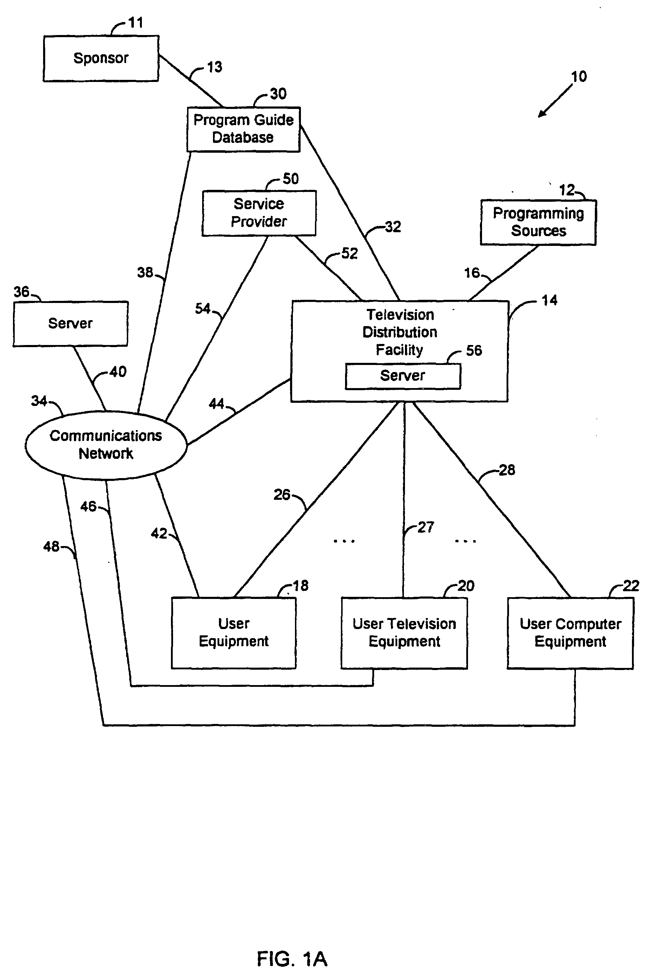

An illustrative interactive television system 10 in accordance with the present invention is shown in FIG. 1A. Television programming and digital music may be provided from programming sources 12 to television distribution facilities such as television distribution facility 14 using communications path 16. Programming sources 12 may be any suitable sources of television and music programming, such as television and music production studios, etc.

Television distribution facility 14 may be a cable system headend, a satellite television distribution facility, a television broadcast facility, or any other suitable facility for distributing television and music programming to users. There are typically numerous television distribution facilities 14 in system 10, but only one is shown in FIG. 1A to avoid over-complicating the drawings.

Communications path 16 may be a satellite path, a fiber-optic path, a cable path, or any other suitable wired or wireless communications paths or combinations of such paths.

Television distribution facility 14 may be connected to various user equipment devices 18. Such user equipment 18 may, for example, be located in the homes of users. User equipment 18 may include user television equipment 20 or user computer equipment 22.

The user equipment may receive television and music programming and other information from television distribution facility 14 over communications paths such as communications paths 26, 27, and 28. The user equipment may also transmit signals to television distribution facility 14 over paths 26, 27, and 28. Paths 26, 27, and 28 may be cables or other wired connections, free-space connections (e.g., for broadcast or other wireless signals), satellite links, etc.

Program guide database 30 may be used to provide the user with television program schedule information such as scheduled broadcast times, titles, channels, ratings information (e.g., parental ratings and critic's ratings), detailed title descriptions, genre or category information (e.g., sports, news, movies, etc.), information on actors and actresses, running times, etc. The information transmitted from program guide database 30 may also include listings groups of programs and other information in accordance with the present invention.

Sponsor 11 may provide advertisements, program group listings, and/or criteria for selecting programs to be part of group listing to program guide database 30 along communications path 13. Program guide database 30 may provide program schedule information and listings groups to television distribution facility 14 over communications path 32 for distribution to the associated user equipment over paths 26, 27, and 28. Communications paths 13 and 32 may be any suitable communications path such as a satellite communications path or other wireless path, a fiber-optic or other wired communications path, a combination of such paths, etc.

User equipment devices such as user television equipment and personal computers may use the program schedule information to display program group listings and information for the user. An interactive television program guide application or other suitable application may be used to display such information on the user's display.

An on-line program guide may be provided by a server connected to communications network 34 such as server 36. Server 36 may receive program schedule information from program guide database 30 via communications path 38, communications network 34, and communications path 40. Paths 38 and 40 may be satellite paths, fiber-optic paths, wired paths, etc. Communications network 34 may be any suitable communications network, such as the Internet, the public switched telephone network, a packet-based network, etc.

User equipment 18 may access the on-line program guide via communications path 42, which may be any suitable communications path such as a wired path, a cable path, fiber-optic path, satellite path, a wireless path, a combination of such paths, or any other suitable path. User equipment 18 may also access the on-line program guide via communications path 26, television distribution facility 14, and communications path 44. For example, a cable modem or the like may be used by user equipment 18 to communicate with television distribution facility 14. Television distribution facility 14 may communicate with communications network 34 over any suitable path 44, such as a wired path, a cable path, fiber-optic path, satellite path, a combination of such paths, etc.

User equipment such as user television equipment 20 and user computer equipment 22 may access the on-line program guide using similar arrangements. User television equipment 20 may access the on-line program guide using communications path 46 or using path 27, television distribution facility 14, and path 44. User computer equipment 22 may access the on-line program guide using communications path 48 or using path 28, television distribution facility 14, and path 44. Paths 46 and 48 may be any suitable paths, such as wired paths, cable paths, fiber-optic paths, satellite paths, a combination of such paths, etc.

Interactive television applications other than program guide applications may use service providers such as service provider 50. For example, a home shopping service may be supported by a service provider such as service provider 50 that has sales representatives, order fulfillment facilities, account maintenance facilities, and other equipment for supporting interactive home shopping features. A home shopping application that is implemented using the user equipment may be used to access the service provider to provide these features to the user. The user equipment may access service provider 50 via television distribution facility 14 and communications path 52 or via communications network 34 and communications path 54. Communications paths such as paths 52 and 54 may be any suitable paths, such as wired paths, cable paths, fiber-optic paths, satellite paths, a combination of such paths, etc.

If desired, an interactive television application such as a video-on-demand application may be supported using server 56. Videos may be stored on server 56 and provided to the user equipment when requested by users.

If desired, applications such as the interactive television program guide application, a home shopping application, a video-on-demand application, and other applications (e.g., applications related to e-mail and chat or other communications functions, etc.) may be provided as separate applications that are accessed through a navigation shell application (i.e., a menu application with menu options corresponding to the applications). The features of such applications may be combined. For example, video-on-demand, home shopping, and communications functions may be incorporated into the program guide.

Moreover, the interactive television program guide application, the home shopping application, the video-on-demand application, the communications application, and the navigation shell application, are only a few illustrative examples of the types of interactive television applications that may be supported by system 10. Other suitable applications that may be supported include, news services, Internet services, interactive wagering services (e.g., for wagering on horse races and the like), communications services (e.g., e-mail, chat, etc.), and any other suitable interactive applications.

These applications may be implemented locally on the user equipment. The applications may also be implemented using a client-server architecture in which the user equipment serves as a client processor and a server such as server 56 at television distribution facility 14 or other suitable location acts as a server processor. Other distributed architectures may also be used if desired. Regardless of the particular arrangement used to implement interactive television features related to program guides, home shopping, video-on-demand, Internet, communications, etc., the software that supports these features may be referred to as an application.

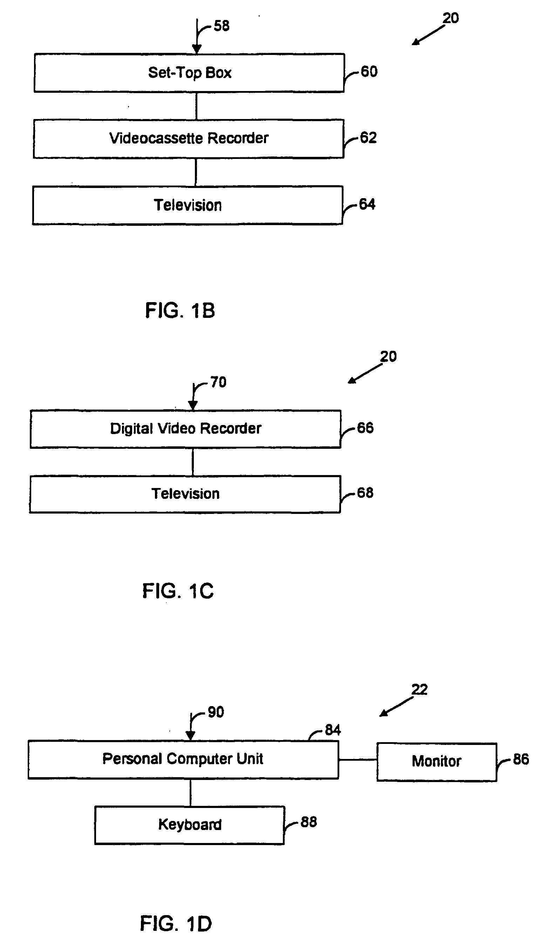

Illustrative user television equipment 20 that is based on a set-top box arrangement is shown in FIG. 1B. Input/output 58 may be connected to communications paths such as paths 27 and 46. Television programming and other information may be received using input/output 58. Commands and requests and other information from the user may also be transmitted over input/output 58.

Set-top box 60 may be any suitable analog or digital set-top box. Set-top box 60 may contain an analog tuner for tuning to a desired analog television channel. Set-top box 60 may also contain digital decoding circuitry for receiving digital television and music channels. Both analog and digital channels may be handled together if desired. Set-top box 60 also contains a processor (e.g., a microcontroller or microprocessor or the like) that is used to execute software applications. Set-top box 60 may contain memory such as random-access memory for use when executing applications. Nonvolatile memory may also be used (e.g., to launch a boot-up routine and other instructions). Hard disk storage may be used to back up data and to otherwise support larger databases than may be supported using random-access memory approaches.

Set-top box 60 may have infrared (IR) or other communications circuitry for communicating with a remote control. Set-top box 60 may also have dedicated buttons and a front-panel display. The front-panel display may, for example, be used to display the current channel to which the set-top box is tuned.

Set-top box 60 may also have communications circuitry such as a cable modem for cable communications over a cable, an integrated services digital network (ISDN) modem for ISDN communications, a digital subscriber line (DSL) modem for DSL communications, a telephone modem for communications over telephone lines, paging communications circuitry for paging communications (e.g., wireless radiofrequency transmissions using paging frequencies), cellular telephone communications circuitry (e.g., for digital cellular telephone data communications), and other equipment for communications using other approaches. Such communications may involve the Internet or any other suitable communications networks or paths.

A videocassette recorder 62 or other suitable recording device may be connected to set-top box 60. This allows videos from set-top box 60 to be recorded. For example, if set-top box 60 is tuned to a given television channel, the video signal for that television channel may be passed to videocassette recorder 62 for recording on a videocassette. If desired, videocassette recorder functions such as start, stop, record, etc. may be controlled by set-top box 60. For example, set-top box 60 may control videocassette recorder 62 using infrared commands directed toward the remote control inputs of videocassette recorder 62.

The output of videocassette recorder 62 may be provided to television 64 for display to the user. If videocassette recorder 62 is not being used, the video signals from set-top box 58 may be provided directly to television 64. If desired, any suitable monitor may be used to display the video.

Another illustrative arrangement for user television equipment 20 is shown in FIG. 1C. In the example of FIG. 1C, user television equipment 20 includes a digital video recorder 66 (e.g., a personal video recorder (PVR)) and a television 68. Input/output 70 may be connected to communications paths such as paths 27 and 46. Television programming and other information may be received using input/output 70. Commands and requests and other information from the user may be transmitted over input/output 70.

Digital video recorder 66 may be similar to a standard set-top box, except that a hard disk or other suitable storage medium may be used for video storage in lieu of videocassettes. The hard disk may be internal to digital video recorder 66. Digital video recorder may also include a digital encoder for converting analog television signals to a digital form for storing on hard disk or other storage medium.

Digital video recorder 66 may contain an analog tuner for tuning to a desired analog television channel. Digital video recorder 66 may also contain digital decoding circuitry for receiving digital television and music channels. If desired, digital video recorder 66 may contain circuitry for handling both analog and digital channels. Digital video recorder 66 also contains a processor (e.g., a microcontroller or microprocessor or the like) that is used to execute software applications. Digital video recorder 66 may contain memory such as random-access memory for use when executing applications. Nonvolatile memory may also be used to store a boot-up routine or other instructions. The hard disk and other storage in digital video recorder 66 may be used to support databases (e.g., program guide databases or interactive television application databases).

Digital video recorder 66 may have IR communications circuitry or other suitable communications circuitry for communicating with a remote control. Digital video recorder 66 may also have dedicated buttons and a front-panel display. The front-panel display may, for example, be used to display the current channel to which the digital video recorder is tuned.

Digital video recorder 66 may also have communications circuitry such as a cable modem, an integrated services digital network (ISDN) modem, a digital subscriber line (DSL) modem, a telephone modem, etc. for communications with other equipment. Such communications may involve the Internet or any other suitable communications networks or paths.

If desired, digital video recorder 66 of FIG. 1C or set-top box 60 of FIG. 1B may be a satellite receiver or other equipment that has wireless communications circuitry for receiving satellite signals.

Television programming may be recorded on the hard disk of digital video recorder 66. Digital video recorder 66 may record new video while previously recorded video is being played back on television 68. This allows users to press a pause button during normal television viewing. When the pause button is pressed, the current television program is stored on the hard disk of digital video recorder 66. When the user presses play, the recorded video may be played back. This arrangement allows the user to seamlessly pause and resume television viewing.

The set-top box arrangement of FIG. 1B and the digital video recorder set-top box arrangement of FIG. 1C are merely illustrative. Other arrangements may be used if desired. For example, user television equipment may be based on a WebTV box, a personal computer television (PC/TV), or any other suitable television equipment arrangement. If desired, the functions of components such as set-top box 60, digital video recorder 66, a WebTV box, or PC/TV or the like may be integrated into a televison or personal computer or other suitable device.

Illustrative user computer equipment 22 is shown in FIG. 1D. In the arrangement of FIG. 1D, personal computer 84 may be controlled by the user using keyboard 86 or other suitable user input device, such as a trackball, mouse, touch pad, touch screen, voice recognition system, etc. Television programming and interactive television application content may be displayed on monitor 88. Television programming and other information may be received from paths 28 and 48 (FIG. 1A) using input/output 90. The user may also send commands and other information to remote services over input/output line 90.

Personal computer unit 84 may contain a television tuner card for decoding analog and digital television channels. The television tuner card may contain an analog tuner for tuning to a given analog channel and digital decoding circuitry for filtering out a desired digital television or music channel from a packetized digital data stream.

The user computer equipment arrangement of FIG. 1D is merely illustrative. Any suitable computer equipment arrangement may be used if desired.

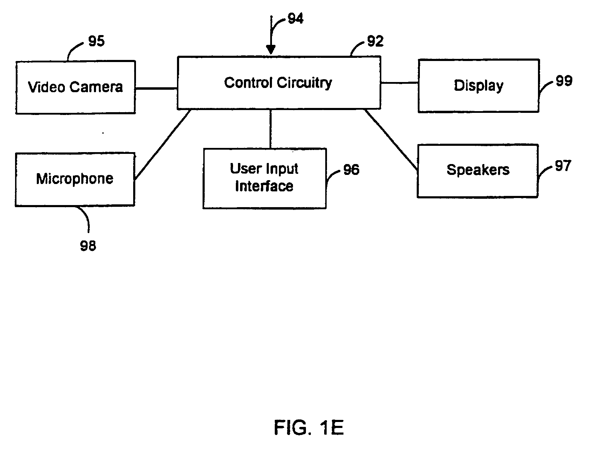

Moreover, the user television equipment and user computer equipment arrangements described above are merely illustrative. A more generalized embodiment of illustrative user equipment is shown in FIG. 1E.

As shown in FIG. 1E, control circuitry 92 is connected to input/output 94. Input/output 94 may be connected to communications paths such as paths 26, 27, 28, 42, 46, and 48 of FIG. 1A. Television and music programming may be received via input/output 94 (e.g., from programming sources 12 and television distribution facility 14). Program schedule information for an interactive television program guide may also be received via input/output 94. Input/output 94 may also be used to receive information for other interactive television applications. The user may use control circuitry 92 to send commands, requests, and other suitable information using input/output 94.

Control circuitry 94 may be based on any suitable processor such as a microprocessor, microcontroller, etc. Memory or other suitable storage devices may be provided as part of control circuitry 94. Tuning circuitry such as an analog tuner, an MPEG-2 decoder or other digital tuning circuitry, or any other suitable tuning circuits or combinations of such circuits may also be included as part of circuitry 92. The tuning circuitry may be used to tune the user equipment to a particular television or music channel. The state of the tuning circuitry may be monitored by an interactive television application such as an interactive television program guide or may be monitored by a monitoring application, or by monitoring functions embedded in any other suitable application. Monitoring may also involved gathering information on the time of day, whether the user equipment is on or off, the status of various button presses, or any other function or hardware state of the user equipment. The information that is monitored may be stored in storage in control circuitry 92 (e.g., on a hard disk or on random-access memory, etc.).

Television programming and on-screen options and information may be displayed on display 99. Display 99 may be a monitor, a television, or any other suitable equipment for displaying visual images. Speakers 97 may be provided as part of a television or may be stand-alone units. Digital music and the audio component of videos displayed on display 99 may be played through speakers 97.

A user may control the control circuitry using user input interface 96. The user input interface may be any suitable user interface, such as a mouse, trackball, keypad, keyboard, touch screen, touch pad, or any other suitable user input interface. A microphone 98 and video camera 95 may be used to supply audio and video information to control circuitry 92.

The present invention provides a system for grouping television programs in arbitrary ways. The program guide system of the present invention may group programs based upon criteria provided by a sponsor (e.g., an advertiser). In addition to an advertiser, the sponsor may include other entities such as the program guide provider or the television service provider. The criteria provided by the sponsor may designate programs that are related in any way. Thus, the program guide system of the present invention provides an outside entity with an opportunity to sponsor a listings group of television programs that are selected based upon the discretion or preference of the sponsor in any unlimited number of ways.

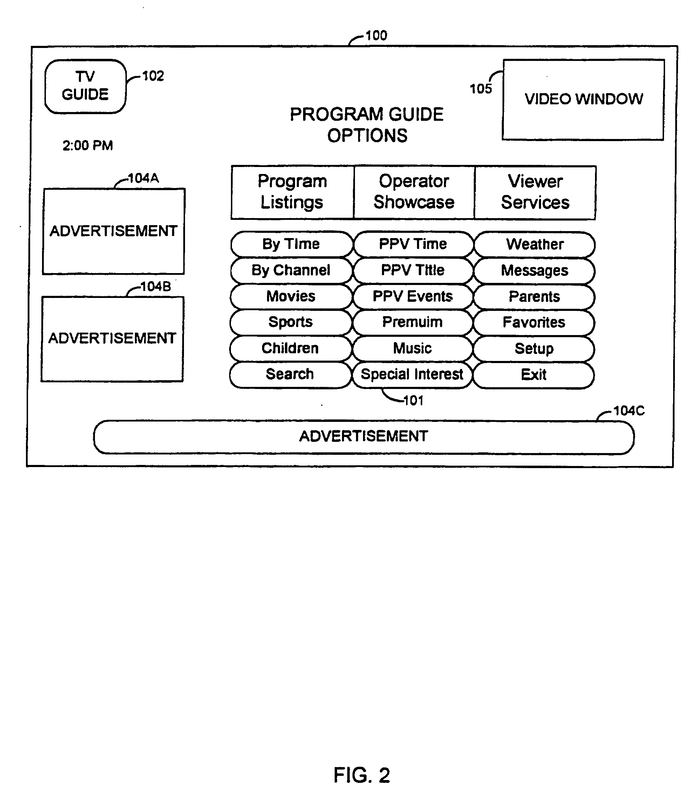

The program guide system of the present invention (hereinafter program guide) groups programs that match criteria provided by a sponsor. The criteria provided by the sponsor may be database criteria, or may be simply a list of programs, with the specific criteria used to select those programs unknown to the program guide. The program guide system of the present invention then provides the user with the option of viewing listings of the programs in that group. For example, display screen 100 shown in FIG. 2 is an example of a program guide main menu screen that provides Special Interest option 101. The user may use UP, DOWN, LEFT and RIGHT arrow buttons on a remote control to scroll between the options on screen 100. A user may select Special Interest option 101 to view program groups of the present invention.

Other items shown on main menu screen 100 and other screens in the program guide include: brand identifier of the guide provider in window 102 (such as the TV Guide logo shown); current time; title of the current screen; Video window 105, typically showing the currently tuned channel, but which may show other videos, such as video clips on demand; and three advertisements 104A-C, which may include text, graphics, video, or any other media. Advertisements may be distributed generally, or may be targeted based on information about the user, the screen displayed, or other criteria. Further features of an illustrative program guide system with targeted advertising are described in Knudson et al. U.S. patent application Serial No. 09/034,939, filed March 4, 1998, which is hereby incorporated by reference herein in its entirety.

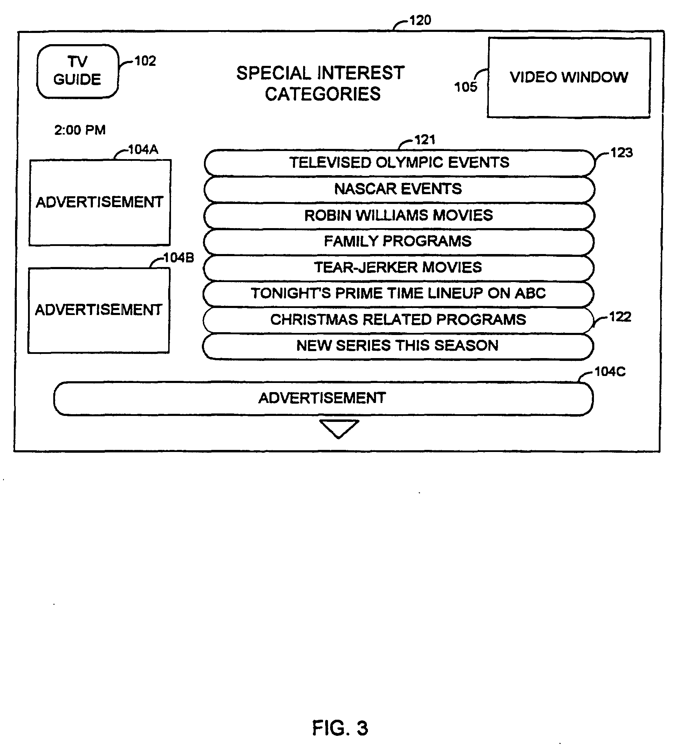

When the user selects option 101 on screen 100 (e.g., by pressing OK on the remote control), the program guide may display, for example, a screen such as screen 120 as shown in FIG. 3. Screen 120 has list 121 of options relating to television program listings groups. Each group in list 121 contains programs that are linked to criteria arbitrarily selected by a sponsor. The criteria may be one or more common attributes among the programs in a group, or may simply be a list of programs selected by the sponsor. The criteria may be selected when the sponsor (e.g., a television network) chooses to promote a set of programming.

List 121 contains groups of programs selected by a sponsor that wishes to promote a particular group of programs. For example, a television network such as NBC may decide to create a listings group for all televised Olympic events that are to be broadcasted on NBC affiliate channels during the summer 2000 Olympic games (e.g., option 123). The common attribute for this listings group is Olympic events. As another example, a NASCAR sponsor may decide to create a grouping of all televised NASCAR events (such as races) on all channels. The common attribute is NASCAR events. As another example, a sponsor may create a grouping of programs on multiple channels starring a certain actor (such as Robin Williams as shown in list 121) or directed by a certain director on all channels or on particular channels. The common attribute is the actor or director common to each film. The programs in a group may be scheduled at different dates and times, and may include video-on-demand programs or programs that have already been recorded (e.g., by a personal video recorder) .

The program guide also provides programs that are grouped based upon their perceived interest to a given type of viewer (e.g., family programs as shown in list 121), or programs that are grouped based upon a sub-genre of programs (e.g., tear-jerker movies as shown in list 121). The program guide may also provide a set of programs that a particular network wishes to promote as a group, such as one night's line up (e.g., tonight's prime time lineup on ABC as shown in list 121), or all comedy series on a particular network. The program guide may also provide a grouping of programs that are related to a specific holiday (e.g., Christmas programs as shown by option 122), or programs that are recommended by a particular reviewer.

The program guide may also provide sets of programs that are new series across several networks at the beginning of the season, or programs that are returning series at the beginning of the fall season. The program guide may also provide a set of programs that are related to a particular sport such as wrestling matches or NCAA games.

The television programs in each group in list 121 may be broadcasted on different channels at different times. Also, the programs in each group in list 121 do not necessarily fall into the same genre of programming. For example, tonight's prime time lineup on ABC may include sitcoms, movies, and news programs. The programs in each group of programs in list 121 may all be related to a sub-genre of programming. This sub-genre may be a common attribute for which each program was selected to be part of the grouping. Further criteria between programs in a listings group provided by a sponsor may include may include specific dates, times, and channels. Another example of criteria is a set of programs that all air advertisements for the sponsor.

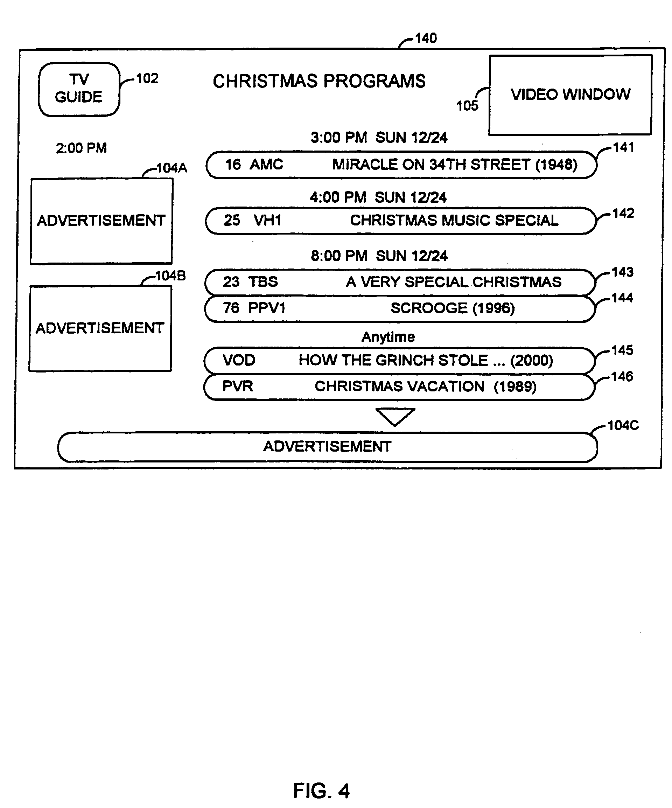

A user may select any of the groups of programs in list 121 to view program listings of the programs in that group. For example, when the user selects option 122 in screen 120, the program guide may, for example, provide screen 140 as shown in FIG. 4. Screen 140 provides a listing of television programs that have Christmas related content. The program guide may also provide listings groups of programs according to the present invention when the user selects an interactive advertisement that is linked to that group of programs. For example, selecting an interactive advertisement (such as advertisements 104A-C) for Christmas programming on all channels may cause the program guide to display screen 140 in FIG. 4.

The program listings in screen 140 are shown in a time ordered list, with programs that may be viewed anytime at the bottom. Other formats for displaying program listings for programs in the selected grouping may also be used. The programs in the selected grouping in screen 140 include pre-scheduled programs 141-144. The selected grouping also includes video on-demand program 145 and pre-recorded program 146 recorded on a personal video recorder, both which may be viewed at any time. The user may select any of the Christmas programs provided in options 141-146 to view a program information screen for that program (e.g., by using UP and DOWN arrow buttons to select a program and then pressing an INFO button on the remote control). The program information screen may provide the user with the opportunity to record the selected program, to view the selected program, set a reminder for the selected program, or purchase the selected program if it is a video-on-demand or pay-per-view program.

It may be desirable to limit the group of programs displayed in the listing so that none of the programs overlap in time. This would allow a user to watch all of the programs in the group. However, some groups of programs may have programs that overlap in time, giving the user a choice between programs. For example, options 143 and 144 in screen 140 overlap in time providing the user with a choice between two Christmas programs that are being broadcast concurrently at 8:00 PM on Sunday, December 24.

Once a program in one of the group listings (such as in screen 140) has expired, that program is no longer displayed as part of the listing. For example, once a program corresponding to one of options 141-144 has ended, that option disappears from screen 140, and once the video-on-demand program corresponding to option 145 is no longer purchasable, option 145 disappears from screen 140. As programs are dropped from the group listings, the program guide may add additional programs (e.g., new video-on-demand programs and programs that are scheduled at a predetermined broadcast time), so that the list is always fresh and always contains about the same number of programs. Alternatively, the entire group may disappear when the last program in the group has ended, when the last program in the group is no longer purchasable, or at some pre-selected time prior to that.

The interactive television program guide system of the present invention may obtain the group listings of television programs in a variety of possible ways. For example, the program guide system may obtain a predefined list of television program names, times, and/or dates directly from the sponsor. This predefined list may be transmitted from the sponsor to each set-top box or the television distribution along with an advertisement for the group listings. Each program guide may display the advertisement on an interactive display screen when appropriate (e.g., in a main menu screen of the program guide). The program guide system corresponds the predefined list from the sponsor with the program guide listings from program guide database 30 to compile a listing of scheduled and on-demand programs that belong in the sponsored group. The program guide may display this listing of programs when the user indicates a desire to view programs in the sponsored group.

In another embodiment, program guide database 30 may provide "flags" on the programs that are to be displayed with the sponsored group of programs. The flags may be, for example, a bit or other set of data that indicates that this program is part of a specific sponsored group. A sponsor may, for example, provide an advertisement for a listings group to the program guide system that has accompanying data which indicates the presence of a specified flag with each program that is part of the group. When the television distribution facility (or set-top box) receives program guide information (such as scheduled television program listings) from program guide database 30, the television distribution facility (or each set-top box) may filter out programs that contain the flag indicated by the sponsor. The program guide may then provide the user with an opportunity to view the sponsored programs (that have the flag indicated by the sponsor) in a group listing. When the user indicates a desire to view the sponsored group listings, the program guide then displays a listing of the programs received from program guide database 30 that have the flag.

In a further embodiment, a sponsor may send a database query (e.g., SQL query) to the television program guide system of the present invention. The database query contains search criteria that is intended to identify television programs that should be included in a sponsored listings group. The database query may be linked to an interactive advertisement for the listings group. The database query may contain search criteria such as dates, times, channels, and genres of programs. For example, a database query for Olympic programming may include search criteria that specifies sports programming on certain channels at certain dates and times that Olympic programs are expected to be broadcast.

Each television program in the listings maintained at program guide database 30 contains data tags that identify the program's broadcast time, date, or status as video on-demand, near video on-demand or pay-per-view. Each program may also contain data tags such as tags that identify the program's genre or that indicate whether it is part of a series of programs. A processor in the set-top box or at the television distribution facility (in a client-server arrangement), for example, may execute the database query by matching the search criteria with data tags for the programs in a database. The database may be a database of program listings that is part of the user television equipment or television distribution facility. The database in the user television equipment or television distribution facility obtains program listings schedules and corresponding data tags and program information for each program from program guide database 30. The program guide then displays the programs that match the search criteria in a listings group when the user indicates a desire to view the listings. The database look-ups in either embodiment may be performed at program guide database 30, as well as at server 56, or user equipment 18/20/22.

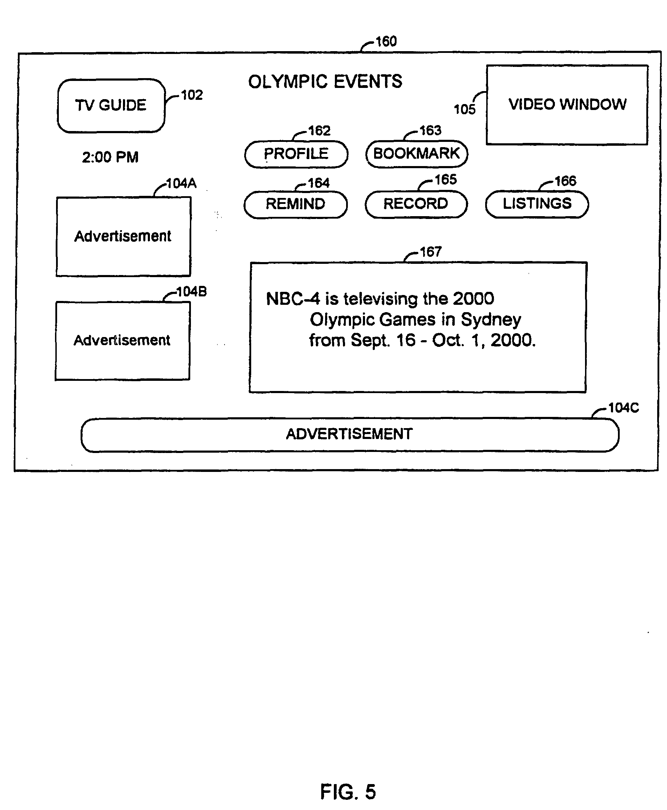

If desired, the program guide can display an information screen such as screen 160 shown in FIG. 5 for the group of programs when the user selects an option in list 121 or an interactive advertisement that is linked to a group of programs. Information screen 160 displays more details about the group of programs selected in list 121 or the interactive advertisement and more information about the sponsorship. For example, if the user selects option 123 in list 121 screen 160 may provide region 167 which describes the channel that is providing the sponsorship (NBC-4) and indicates that NBC-4 is broadcasting summer Olympic 2000 games from September 16 - October 1, 2000 as part of the selected program grouping.

Display screen 160 also provides selectable options 162-166. The user may select options 162-166 using UP, DOWN, LEFT, and RIGHT arrow buttons on the remote control. When the user selects option 162, the program guide adds the common attributes of the programs in the selected group (e.g., Olympic games) to the user's profile if the program guide supports user profiles. Further features of an illustrative program guide system with preference profiles is described in Ellis et al. U.S. patent application Serial No. 09/034,934, filed March 4, 1998, which is hereby incorporated by reference herein in its entirety. The program guide may use the user's profile information to provide, for example, targeted advertising, listings of suggested programs, automatic reminders, highlighting programs in listings, etc. for programs that match the user's preferences.

When the user selects option 163 in screen 160, the program guide saves the current program listings group so that it may be easily accessed by the user in the future. For example, the program guide can save information for the current listings group in the memory of set-top box 60 and move the current listings group to the top of the list of groups accessible from the program guide menus (e.g., list 121). The bookmark may remain available even after the program group or any associated advertisement is no longer directly available. If desired, the program guide may create a special option in main menu screen 100 to access the listings group for which the bookmark has been set.

When the user selects option 164, the program guide sets a reminder for all of the programs in the currently selected group. For example, the program guide may display a reminder message on the television screen several minutes before each Olympic event is aired.

When the user selects option 165, the program guide automatically records all of the programs in the selected group when each program is broadcasted. The program guide may record each program using videocassette recorder 62 or digital video recorder 66. If desired, television programs may be recorded at server 56 or 36, or at another memory storage device at a television distribution facility or connected to the user television equipment through the television distribution facility or a separate communications path (e.g., a phone line, cable line, satellite link, etc.). The program guide application or server may require that the user enter a debit account number before the transaction is completed so that the user's account may be charged. If desired, the user account information may be stored in set-top box 60 and automatically sent to the television distribution facility so that the user's account may be charged for the server-based recording. When the recording is complete, the program guide may notify the user that the program has been recorded and is available for viewing. Further features of an illustrative client-server based interactive television program guide system with remote server recording are described in Ellis et al. U.S. patent application Serial No. 09/332,244, filed June 11, 1999 (US-A-2003149988).

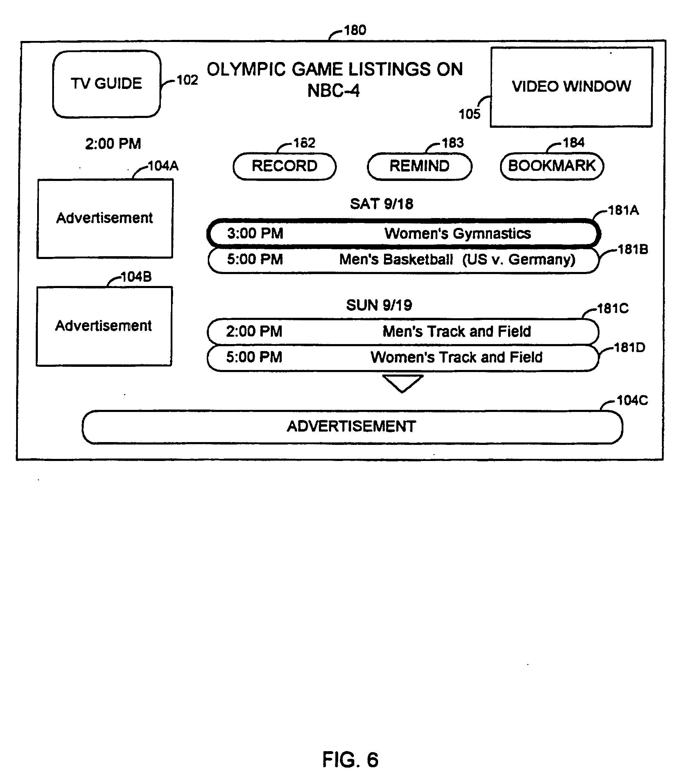

When the user selects option 166, the program guide provides program listings for the selected program group. For example, the program guide may provide listings screen 180 as shown in FIG. 6. Screen 180 provides a listings of upcoming programs in the program listings group corresponding to option 123 (FIG. 3) for Olympic events. The programs displayed in screen 180 are provided in a time-ordered list, but other formats may be used as well. The user may use the RIGHT and LEFT arrow keys on the remote control to select one of option 182 (to record all the programs in the groups), option 183 (to set a reminder for all of the programs in the group), or option 184 (to bookmark the group) as discussed above.

The user may select a one of program options 181A-181D, for example, by pressing the UP and DOWN arrow keys on the remote control. The user may select other programs in the Olympic Events group that are being broadcast at times further in the future than the programs currently displayed on screen 180 by continuing to press the DOWN arrow key. Once a program option on screen 180 has been selected (e.g., option 181A), the user may then use the RIGHT and LEFT arrow keys to record, set a reminder, or bookmark only the selected program. Alternatively, the option may apply to the entire list of programs. If a bookmark is selected for a single program, the program guide may move that program to the top of the list in screen 180, or to the top of the general-purpose listings of programs to be aired that particular day.

The program guide may provide the user with the opportunity to view an information screen for a particular television program. The information screen may contain options relating to a listings group of programs that the particular program is a part of, such as options to display an information screen or program listings screen for the group or to find other programs in the group. The user may, for example, access the information screen for the program from program listings for a group of programs (such as screens 140 or 180). For example, the user may select a program in the interactive program listings using arrow keys on the remote control and press the INFO button to view an information screen for the selected program. The user may also view an information screen for a program by selecting the program in the general-purpose program listings, or in program listings that are grouped by a specific genre (such as movies, sports, etc.).

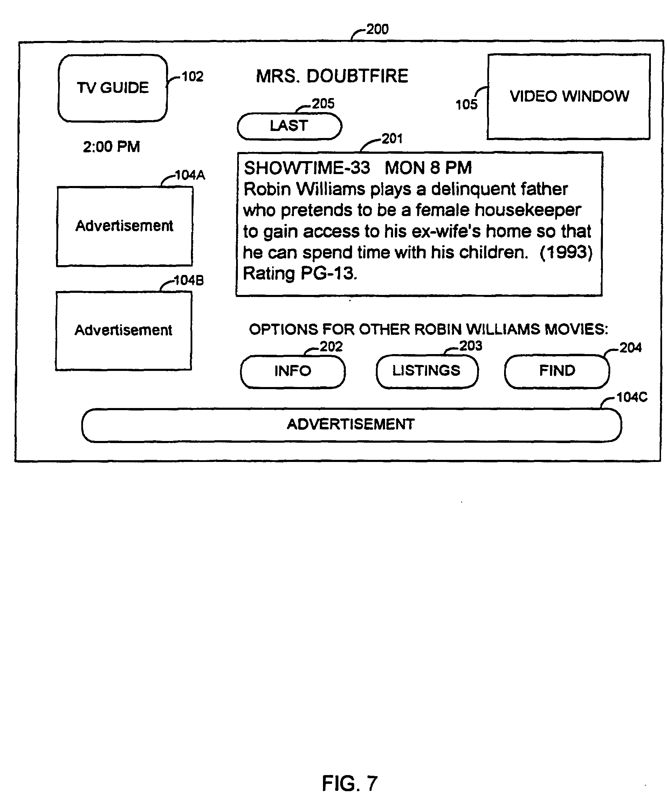

The information screen for the program can contain options relating to a group of programs which that program is a part of. The information screen can also include options related to the individual program (e.g., Remind, Record, Other Air Times, Lock, Order, etc.) For example, when the user selects the program "Mrs. Doubtfire" from the general-purpose program listings and presses the INFO key, the program guide may display program information screen 200 as shown in FIG. 7. Screen 200 provides the user with program description, channel, time, and rating information in region 201. The program guide may also provide options relating specifically to Mrs. Doubtfire. If the program "Mrs. Doubtfire" is part of a sponsored listings group of programs according to the present invention, screen 200 displays interactive options such as options 202-204 which provide the user with the opportunity to find out more about the sponsored group of programs. For example, the movie program "Mrs. Doubtfire" may be part of a sponsored group of programs that including films starring the actor Robin Williams.

The user may select options 202-204 using RIGHT and LEFT arrow keys (and an OK key) on the remote control. When the user selects option 202, the program guide may provide an information screen for the grouping of programs that relate to Robin Williams films. When the user selects option 203, the program guide may provide program listings for the listings group that display channel, time, and program information for the Robin Williams films in the group that are being broadcast on channels or video-on-demand. The user may select LAST option 205 to return the to previous program guide display screen by pressing an UP arrow key on the remote control.

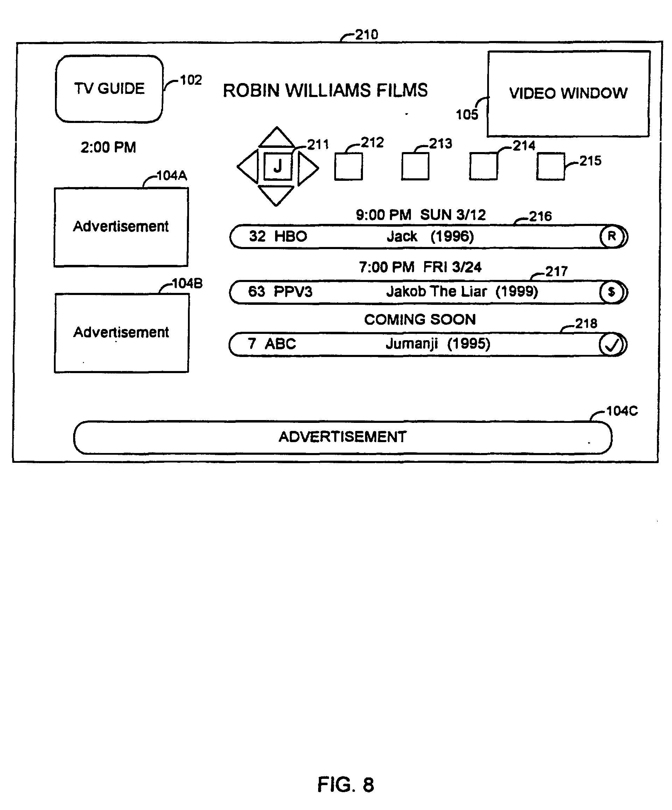

When the user selects FIND option 204, the program guide may provide a display screen such as screen 210 shown in FIG. 8. Screen 210 provides the user with the opportunity to search for programs in the same group as the program displayed in screen 200. The user may search for a program in the Robin Williams films group by entering letters corresponding to the title of the movie in regions 211-215. The user may enter letters in regions 211-215 by using UP and DOWN arrow keys on the remote control to select a letter in regions 211-215. The user may scroll between regions 211-215 by pressing LEFT and RIGHT arrow keys on the remote control. The program guide may then display a listing of program in the Robin Williams films group that have the characters entered in regions 211-215 as the first five characters their titles, as shown in FIG. 8.

The user may continue pressing the RIGHT arrow key past region 215 to highlight programs in screen 210. The user may press OK on the remote control to select a program (such as programs 216-218). The program guide may then display an information screen for the selected program that displays the program description, options related to the program (such as set a reminder or record), and options relating to any group the program may be part of. The "R" symbol in program option 216 indicates that it has been set to be recorded. The dollar symbol in program option 217 indicates that it is a pay per view program. The check mark in program option 218 indicates that a reminder has been set for the program.

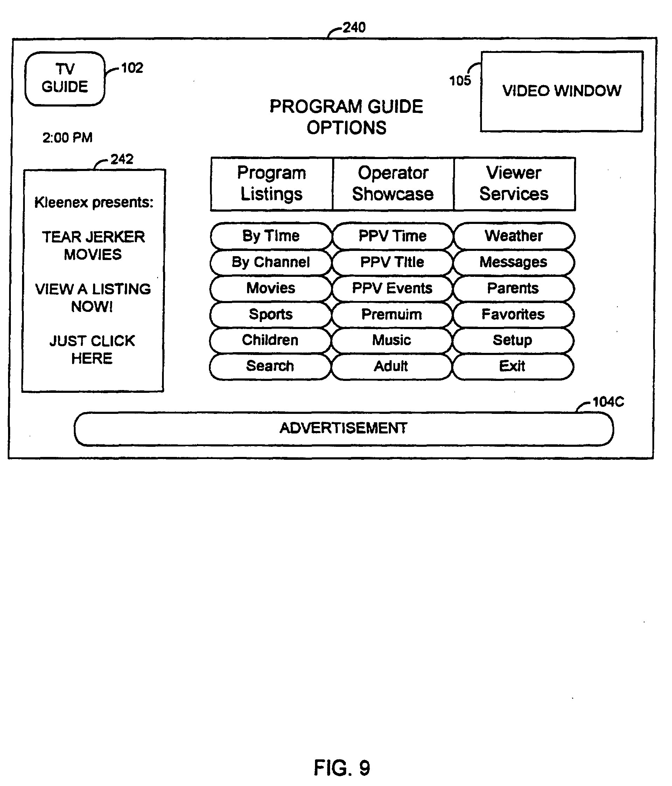

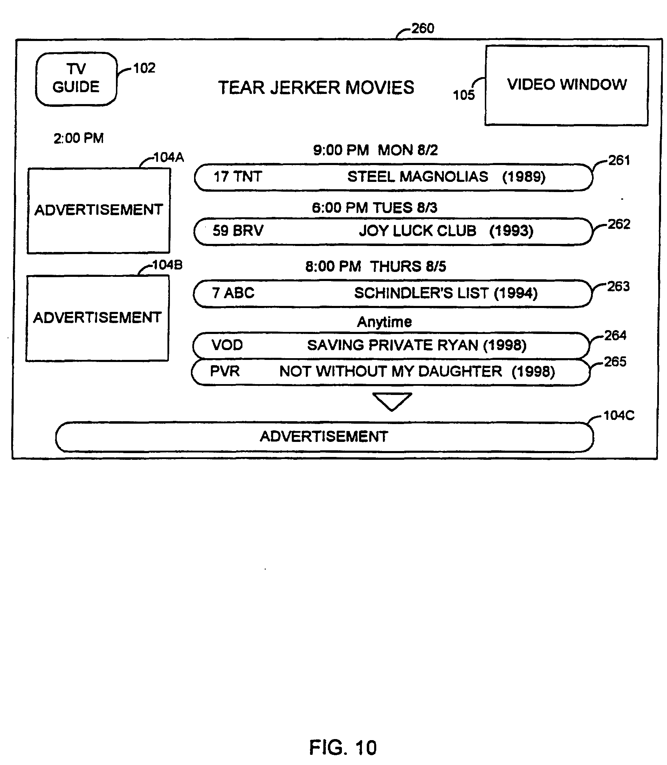

Display screen 240 shown in FIG. 9 is an example of a program guide main menu screen with interactive advertisement 242 for a program listings group of the present invention. A user may select advertisement 242 to view an information screen or a listings of the programs in the advertised listings group. The program guide system may display a listing of programs in the listings group such as interactive screen 260 as shown, for example, in FIG. 10 when the user selects advertisement 242. The programs in the listings group are tear jerker movies sponsored by Kleenex, in the example of FIG. 9-10. Screen 260 displays the programs in a time ordered list with programs that may be viewed anytime at the bottom (e.g., video on-demand and pre-recorded programs). other display formats may be used. The user may view, set reminders for, or record programs displayed on screen 260 by selecting one or more of options 261-265 and then pressing an INFO button on the remote control. The program guide then displays an information screen containing options relating to the selected program(s). The user may select additional programs by pressing the down arrow on the remote control.

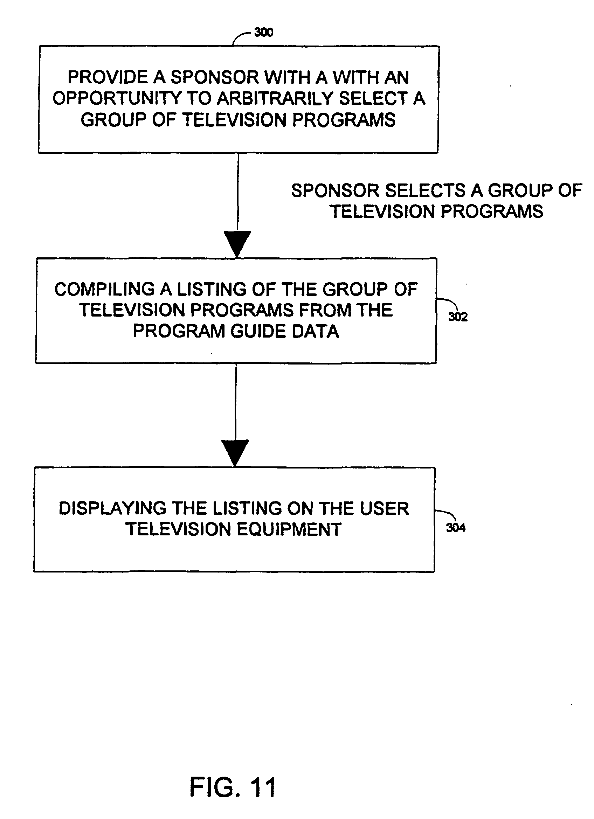

An illustrative process for providing program listings groups to a user in accordance with the present invention is shown in FIG. 11. At step 300, the program guide system provides a sponsor with an opportunity to arbitrarily select a group of television programs. For example, program guide database 30 may contain software configured to receive electronic messages along path 13 from sponsor 11. Sponsor 11 then transmits to program guide database 30 a selected group of programs to be sponsored. If desired, sponsor 11 may send a selected group of programs via regular mail, and then the program data is entered manually into the program guide database. The program guide system may be configured to receive a listing of programs, criteria to perform a database query, or selected program data flags from the sponsor to form the listings group, as discussed above.

At step 302, the program guide system compiles the listings group from the general program guide data using the listing, database criteria, or data flag from the sponsor. This function may be performed at the program guide database, television distribution facility, a server, or the user equipment. The function may be performed repeatedly as the program guide data changes over time to update information in the listings group. At step 304, the listings group is displayed on the user equipment (e.g., on a television or computer screen) as a advertisement, an option in a list, an information screen, a listing of programs, or other format (e.g., FIGS. 2, 3, 7, and 9).

## Claims

1. An interactive television program guide system comprising:
a store for a database (30) of program guide data, where the database (30) is accessible by a sponsor (11), a television distribution facility (14) and a communications network (34); and
user equipment (18) connected to the television distribution facility (14) that receives television programm guide data from the television distribution facility (14), wherein the program guide data includes program guide listings; and wherein the user equipment is configured to support an interactive television program guide based on the program guide listings; receive an indication from a sponsor (11) of listings of sponsored television programs to be grouped; compile a sponsored group of listings from the indicated program guide listings; and provide a user of the user equipment (18) with a display of the sponsored group of listings on user equipment (18).

2. The interactive television program guide system of claim 1 wherein the sponsored group of listings are linked to an advertisement for the group of listings.

3. The interactive television program guide system of claim 2 wherein the advertisement is an interactive advertisement.

4. The interactive television program guide system of claim 1 wherein the interactive television program guide system selects television programs to be part of a group using a database query.

5. The interactive television program guide system of claim 1 wherein the interactive television program guide system selects television programs to be part of a group based on a predefined list of programs provided by the sponsor.

6. The interactive television program guide system of claim 1 wherein the interactive television program guide system selects television program to be part of a group based upon the presence of a data flag associated with programs in the program guide data.

7. The interactive television program guide system of claim 1 wherein the interactive television program guide is configured to display an information screen relating to at least one of the groups of television programs on the user equipment (18).

8. The interactive television program guide system of claim 1 wherein the interactive television program guide provides the user with an opportunity to record the programs in at least one of the groups with a single selection.

9. The interactive television program guide system of claim 1 wherein the interactive television program guide provides the user with an opportunity to set reminders for each of the programs in at least one of the groups with a single selection.

10. The interactive television program guide system of claim 1 wherein the interactive television program guide automatically sets a reminder for each of the programs in at least one of the groups when the user indicates an interest in that group.

11. The interactive television program guide system of claim 1 wherein the user equipment (18) is user television equipment (20).

12. The interactive television program guide system of claim 1 wherein the user equipment (18) is user computer equipment (22).

13. The interactive television program guide system of claim 1 wherein the interactive television program guide provides the user with the opportunity to set a bookmark for the group.

14. The interactive television program guide system of claim 1 wherein the interactive television program guide provides the user with the opportunity to search for programs in the group.

15. The interactive television program guide system of claim 1 wherein the interactive television program guide provides the user with the opportunity to add the group to a user profile.

16. The interactive television program guide system of claim 1 wherein the interactive television program guide system is implemented in a client-server arrangement.

17. A method for using an interactive television program guide with listings groups comprising:
providing television programming to user equipment (18) from a television distribution facility (14);
supporting an interactive television program guide based on program guide listings at least partly on the user equipment (18);
providing television program guide data to the interactive television program guide for display on the user equipment, wherein the television program guide data includes program guide listings and the user equipment is configured to
receive an indication from a sponsor (11) of listings of television programs to be grouped;
compile a sponsored group of listings from the indicated program guide listings; and
display the sponsored group of listings on the user equipment (18).

18. The method of claim 17 wherein displaying the sponsored group listings further comprises displaying the listing on the user equipment (18) when the user selects an interactive advertisement for the sponsored group.

19. The method of claim 17 further comprising displaying an information screen relating to the group of television programs on the user equipment (18).

20. The method of claim 17 wherein compiling the sponsored group of listings further comprises compiling the listing of the group of television programs from the program guide data using a predefined list of programs provided by the sponsor.

21. The method of claim 17 wherein compiling the listing further comprises compiling the listing of the group of television programs from the program guide data based upon the presence of a data flag associated with programs in the program guide data.

22. The method of claim 17 further comprising displaying an information screen relating to the group of television programs on the user equipment.

23. The method of claim 17 further comprising providing the user with an opportunity to record the programs in the group with a single selection.

24. The method of claim 17 further comprising providing the user with the opportunity to set reminders for each of the programs in the group with a single selection.

25. The method of claim 17 further comprising automatically setting a reminder for each of the programs in the group when the user indicates an interest in the group.

26. The method of claim 17 wherein the user equipment (18) is user television equipment (20).

27. The method of claim 17 wherein the user equipment (18) is user computer equipment (22).

28. The method of claim 17 further comprising providing the user with the opportunity to set a bookmark for the group.

29. The method of claim 17 further comprising providing the user with the opportunity to search for programs in the group.

30. The method of claim 17 further comprising providing the user with the opportunity to add at least one of the groups to a user profile.

31. The method of claim 17 wherein supporting the interactive television program guide further comprises supporting the interactive television program guide in a client-server arrangement partly on the user equipment (18) and partly on a server (56).

32. The interactive television program guide system of claim 1 wherein the
user is presented with an opportunity to view a listing of television programs within a group that are arbitrarily selected by a sponsor by selecting an interactive advertisement for the group.

33. The interactive television program guide system of claim 32 wherein the user equipment (18) selects television programs to be part of the group using a database query.

34. The interactive television program guide system of claim 32 wherein the user equipment (18) selects television programs to be part of the group based on a predefined list of programs provided by the sponsor.

35. The interactive television program guide system of claim 32 wherein the user equipment (18) selects television programs to be part of the group based upon the presence of a data flag associated with programs in the program guide data.

36. The interactive television program guide system of claim 32 wherein interactive television program guide is configured to display an information screen relating to the group of television programs on the user equipment (18).

37. The interactive television program guide system of claim 32 wherein the interactive television program guide provides the user with an opportunity to record the programs in the group with a single selection.

38. The interactive television program guide system of claim 32 wherein the interactive television program guide provides the user with the opportunity to set reminders for each of the programs in the group with a single selection.

39. The interactive television program guide system of claim 32 wherein the interactive television program guide automatically sets a reminder for each of the programs in the group when the user indicates an interest in that group.

40. The interactive television program guide system of claim 32 wherein the user equipment (18) is user television equipment (20).

41. The interactive television program guide system of claim 32 wherein the user equipment (18) is user computer equipment (22).

42. The interactive television program guide system of claim 32 wherein the interactive television program guide provides the user with the opportunity to set a bookmark for the group.

43. The interactive television program guide system of claim 32 wherein the interactive television program guide provides the user with the opportunity to search for programs in the group.

44. The interactive television program guide system of claim 32 wherein the interactive television program guide provides the user with the opportunity to add the group to a user profile.

45. The interactive television program guide system of claim 32 wherein the interactive television program guide system is implemented in a client-server arrangement.

46. A method for using an interactive television program guide with listings groups of claim 17 comprising displaying the listing on the user equipment (18) upon the user selection of an interactive advertisement for the group of listings of television programs.

47. The method of claim 46 wherein compiling the listing further comprises compiling the listing of the group of television programs from the program guide data using a database query.

48. The method of claim 46 wherein compiling the listing further comprises compiling the listing of the group of television programs from the program guide data using a predefined list of programs provided by the sponsor.

49. The method of claim 46 wherein compiling the listing further comprises compiling the listing of the group of television programs from the program guide data based upon the presence of a data flag associated with programs in the program guide data.

50. The method of claim 46 further comprising displaying an information screen relating to the group of television programs on the user equipment (18).

51. The method of claim 46 further comprising providing the user with an opportunity to record the programs in the group with a single selection.

52. The method of claim 46 further comprising providing the user with the opportunity set reminders for each of the programs in the group with a single selection.

53. The method of claim 46 further comprising automatically setting a reminder for each of the programs in the group when the user indicates an interest in the group.

54. The method of claim 46 wherein the user equipment (18) is user television equipment (20).

55. The method of claim 46 wherein the user equipment (18) is computer equipment (22).

56. The method of claim 46 further comprising providing the user with the opportunity to set a bookmark for the group.

57. The method of claim 46 further comprising providing the user with the opportunity to search for programs in the group.

58. The method of claim 46 further comprising providing the user with the opportunity to add at least one of the groups to a user profile.

59. The method of claim 46 wherein supporting the interactive television program guide further comprises supporting the interactive television program guide in a client-server arrangement partly on the user equipment (18) and partly on a server (56).

## Patentansprüche

1. Interaktives Fernsehprogrammführungssystem enthaltend:
einen Speicher für eine Datenbank (30) mit Programmführungsdaten, wobei auf die Datenbank (30) durch einen Sponsor (11), eine Fernsehdistributionseinrichtung (14) und ein Kommunikationsnetzwerk (34) zugegriffen werden kann; und
eine Benutzereinrichtung (18), die mit der Fernsehdistributionseinrichtung (14) verbunden ist und Fernsehprogrammführungsdaten von der Fernsehdistributionseinrichtung (14) empfängt, wobei die Programmführungsdaten Programmführungslisten enthalten; und wobei die Benutzereinrichtung konfiguriert ist, um eine interaktive Fernsehprogrammführung basierend auf den Programmführungslisten zu unterstützen; eine Angabe von einem Sponsor (11) von Listen von gesponserten Programmen, die zu gruppieren sind, zu empfangen; eine gesponserte Gruppe von Listen von den angegebenen Programmführungslisten zu erstellen; und einem Benutzer der Benutzereinrichtung (18) die gesponserte Gruppe von Listen auf der Benutzereinrichtung (18) anzuzeigen.

2. Interaktives Fernsehprogrammführungssystem nach Anspruch 1, bei dem die gesponserte Gruppe von Listen mit einer Werbung für die Gruppe von Listen verknüpft ist.

3. Interaktives Fernsehprogrammführungssystem nach Anspruch 2, bei dem die Werbung eine interaktive Werbung ist.

4. Interaktives Fernsehprogrammführungssystem nach Anspruch 1, wobei das interaktive Fernsehprogrammführungssystem Fernsehprogramme auswählt, um Teil einer Gruppe zu sein, indem eine Datenbankabfrage verwendet wird.

5. Interaktives Fernsehprogrammführungssystem nach Anspruch 1, wobei das interaktive Fernsehprogrammführungssystem Fernsehprogramme auswählt, um Teil einer Gruppe zu sein, basierend auf einer vordefinierten Liste von Programmen, die von dem Sponsor bereitgestellt werden.

6. Interaktives Fernsehprogrammführungssystem nach Anspruch 1, wobei das interaktive Fernsehprogrammführungssystem ein Fernsehprogramm auswählt, um Teil einer Gruppe zu sein, basierend auf dem Vorhandensein eines Datenflags, das mit Programmen in den Programmführungsdaten in Zusammenhang steht.

7. Interaktives Fernsehprogrammführungssystem nach Anspruch 1, wobei das interaktive Fernsehprogrammführungssystem konfiguriert ist, um einen Informationsschirm bezogen auf mindestens eine der Gruppen von Fernsehprogrammen auf der Benutzereinrichtung (18) anzuzeigen.

8. Interaktives Fernsehprogrammführungssystem nach Anspruch 1, wobei das interaktive Fernsehprogrammführungssystem dem Benutzer eine Möglichkeit gibt die Programme in mindestens einer der Gruppen mit einer einzelnen Auswahl aufzunehmen.

9. Interaktives Fernsehprogrammführungssystem nach Anspruch 1, wobei die interaktive Fernsehprogrammführung dem Benutzer ein Möglichkeit gibt Erinnerungen für jedes der Programme in mindestens einer der Gruppen mit einer einzelnen Auswahl zu setzen.

10. Interaktives Fernsehprogrammführungssystem nach Anspruch 1, wobei die interaktive Fernsehprogrammführung automatisch eine Erinnerung für jedes der Programme in mindestens einer der Gruppen setzt, wenn der Benutzer ein Interesse an dieser Gruppe zeigt.

11. Interaktives Fernsehprogrammführungssystem nach Anspruch 1, bei dem die Benutzereinrichtung (18) eine Benutzerfernseheinrichtung (20) ist.

12. Interaktives Fernsehprogrammführungssystem nach Anspruch 1, bei dem die Benutzereinrichtung (18) eine Benutzercomputereinrichtung (22) ist.

13. Interaktives Fernsehprogrammführungssystem nach Anspruch 1, wobei die interaktive Fernsehprogrammführung dem Benutzer eine Möglichkeit gibt ein Lesezeichen für die Gruppe zu setzen.

14. Interaktives Fernsehprogrammführungssystem nach Anspruch 1, wobei die interaktive Fernsehprogrammführung dem Benutzer eine Möglichkeit gibt nach Programmen in der Gruppe zu suchen.

15. Interaktives Fernsehprogrammführungssystem nach Anspruch 1, wobei die interaktive Fernsehprogrammführung dem Benutzer eine Möglichkeit gibt die Gruppe zu einem Benutzerprofil hinzuzufügen.

16. Interaktives Fernsehprogrammführungssystem nach Anspruch 1, wobei das interaktive Fernsehprogrammführungssystem in einer Client-Server Anordnung implementiert ist.

17. Verfahren zum Verwenden einer interaktiven Fernsehprogrammführung mit Listengruppen, mit den Schritten:
Bereitstellen eines Fernsehprogramms für eine Benutzereinrichtung (18) durch eine Fernsehverteilungseinrichtung (14);
Unterstützen einer interaktiven Fernsehprogrammführung basierend auf Programmführungslisten zumindest teilweise auf der Benutzereinrichtung (18);
Bereitstellen von Fernsehprogrammführungsdaten für die interaktive Fernsehprogrammführung zur Anzeige auf der Benutzereinrichtung, wobei die Fernsehprogrammführungsdaten Programmführungslisten enthalten, und die Benutzereinrichtung konfiguriert ist, um
eine Angabe von einem Sponsor (11) von Listen von Fernsehprogrammen, die zu gruppieren sind, zu empfangen;
eine gesponserte Gruppe von Listen von den angegebenen Programmführungslisten zu erstellen; und
die gesponserte Gruppe von Listen auf der Benutzereinrichtung (18) anzuzeigen.

18. Verfahren nach Anspruch 17, wobei das Anzeigen der gesponserten Gruppenlisten ferner ein Anzeigen der Liste auf der Benutzereinrichtung (18) aufweist, wenn der Benutzer eine interaktive Werbung für die gesponserte Gruppe auswählt.

19. Verfahren nach Anspruch 17, ferner mit einem Anzeigen eines Informationsschirms bezogen auf die Gruppe von Fernsehprogrammen auf der Benutzereinrichtung (18).

20. Verfahren nach Anspruch 17, wobei das Erstellen der gesponserten Gruppe von Listen ferner ein Erstellen der Liste der Gruppe von Fernsehprogrammen von dem Programmführungsdaten aufweist, indem eine vordefinierte Liste von Programmen verwendet wird, die durch den Sponsor bereitgestellt wird.

21. Verfahren nach Anspruch 17, wobei das Erstellen der Liste ferner ein Erstellen der Liste der Gruppe von Fernsehprogrammen von den Programmführungsdaten aufweist, basierend auf dem Vorhandensein eines Datenflags, das mit Programmen in den Programmführungsdaten in Zusammenhang steht.

22. Verfahren nach Anspruch 17, ferner mit einem Anzeigen eines Informationsschirms bezogen auf die Gruppe von Fernsehprogrammen auf der Benutzereinrichtung.

23. Verfahren nach Anspruch 17, ferner mit einem Bereitstellen einer Möglichkeit für den Benutzer die Programme in der Gruppe mit einer einzelnen Auswahl aufzunehmen.

24. Verfahren nach Anspruch 17, ferner mit dem Bereitstellen einer Möglichkeit für den Benutzer Erinnerungen für jedes der Programme in der Gruppe mit einer einzelnen Auswahl zu setzen.

25. Verfahren nach Anspruch 17, ferner mit einem automatischen Setzen einer Erinnerung für jedes der Programme in der Gruppe, wenn der Benutzer ein Interesse an der Gruppe zeigt.

26. Verfahren nach Anspruch 17, wobei die Benutzereinrichtung (18) eine Benutzerfernseheinrichtung (20) ist.

27. Verfahren nach Anspruch 17, wobei die Benutzereinrichtung (18) eine Benutzercomputereinrichtung (22) ist.

28. Verfahren nach Anspruch 17, ferner mit einem Bereitstellen einer Möglichkeit für den Benutzer ein Lesezeichen für die Gruppe zu setzen.

29. Verfahren nach Anspruch 17, ferner mit einem Bereitstellen einer Möglichkeit für den Benutzer Programme in der Gruppe zu suchen.

30. Verfahren nach Anspruch 17, ferner mit einem Bereitstellen einer Möglichkeit für den Benutzer mindestens eine der Gruppen zu einem Benutzerprofil hinzuzufügen.

31. Verfahren nach Anspruch 17, wobei das Unterstützen der interaktiven Fernsehprogrammführung ferner ein Unterstützen der interaktiven Fernsehprogrammführung in einer Client-Server Anordnung teilweise auf der Benutzereinrichtung (18) und teilweise auf einem Server (56) aufweist.

32. Interaktives Fernsehprogrammführungssystem nach Anspruch 1, wobei dem Benutzer eine Möglichkeit gegeben wird eine Liste von Fernsehprogrammen innerhalb einer Gruppe anzusehen, die willkürlich durch einen Sponsor ausgewählt sind, durch Auswählen einer interaktiven Werbung für die Gruppe.

33. Interaktives Fernsehprogrammführungssystem nach Anspruch 32, wobei die Benutzereinrichtung (18) Fernsehprogramme auswählt, um Teil der Gruppe zu sein, indem eine Datenbankabfrage verwendet wird.

34. Interaktives Fernsehprogrammführungssystem nach Anspruch 32, wobei die Benutzereinrichtung (18) Fernsehprogramme auswählt, um Teil der Gruppe zu sein, basierend auf einer vordefinierten Liste von Programmen, die durch den Sponsor bereitgestellt werden.

35. Interaktives Fernsehprogrammführungssystem nach Anspruch 32, wobei die Benutzereinrichtung (18) Fernsehprogramme auswählt, um Teil der Gruppe zu sein, basierend auf dem Vorhandensein eines Datenflags, das mit Programmen in den Programmführungsdaten in Zusammenhang steht.

36. Interaktives Fernsehprogrammführungssystem nach Anspruch 32, wobei die interaktive Fernsehprogrammführung konfiguriert ist, um einen Informationsschirm bezogen auf die Gruppe von Fernsehprogrammen auf der Benutzereinrichtung (18) anzuzeigen.

37. Interaktives Fernsehprogrammführungssystem nach Anspruch 32, wobei die interaktive Fernsehprogrammführung dem Benutzer eine Möglichkeit gibt die Programm in der Gruppe mit einer einzelnen Auswahl aufzunehmen.

38. Interaktives Fernsehprogrammführungssystem nach Anspruch 32, wobei die interaktive Fernsehprogrammführung dem Benutzer eine Möglichkeit gibt Erinnerungen für jedes der Programme in der Gruppe mit einer einzelnen Auswahl zu setzen.

39. Interaktives Fernsehprogrammführungssystem nach Anspruch 32, wobei die interaktive Fernsehprogrammführung automatisch eine Erinnerung für jedes der Programme in der Gruppe setzt, wenn der Benutzer ein Interesse an dieser Gruppe zeigt.

40. Interaktives Fernsehprogrammführungssystem nach Anspruch 32, wobei die Benutzereinrichtung (18) eine Benutzerfernseheinrichtung (20) ist.

41. Interaktives Fernsehprogrammführungssystem nach Anspruch 32, wobei die Benutzereinrichtung (18) eine Benutzercomputereinrichtung (22) ist.

42. Interaktives Fernsehprogrammführungssystem nach Anspruch 32, wobei die interaktive Fernsehprogrammführung dem Benutzer eine Möglichkeit gibt ein Lesezeichen für die Gruppe zu setzen.

43. Interaktives Fernsehprogrammführungssystem nach Anspruch 32, wobei die interaktive Fernsehprogrammführung dem Benutzer die Möglichkeit gibt nach Programmen in der Gruppe zu suchen.

44. Interaktives Fernsehprogrammführungssystem nach Anspruch 32, wobei die interaktive Fernsehprogrammführung dem Benutzer eine Möglichkeit gibt die Gruppe einem Benutzerprofil hinzuzufügen.

45. Interaktives Fernsehprogrammführungssystem nach Anspruch 32, wobei das interaktive Fernsehprogrammführungssystem in einer Client-Server Anordnung implementiert ist.

46. Verfahren zum Verwenden einer interaktiven Fernsehprogrammführung mit Listengruppen nach Anspruch 17, mit einem Anzeigen der Liste auf der Benutzereinrichtung (18) bei einer Benutzerauswahl einer interaktiven Werbung für die Gruppe der Listen von Fernsehprogrammen.

47. Verfahren nach Anspruch 46, wobei das Erstellen der Liste ferner ein Erstellen der Liste der Gruppe von Fernsehprogrammen aus den Programmführungsdaten aufweist, indem eine Datenbankabfrage verwendet wird.

48. Verfahren nach Anspruch 46, wobei das Erstellen der Liste ferner ein Erstellen der Liste der Gruppe von Fernsehprogrammen aus den Programmführungsdaten aufweist, indem eine vordefinierte Liste von Programmen verwendet wird, die durch den Sponsor bereitgestellt wird.

49. Verfahren nach Anspruch 46, wobei das Erstellen der Liste ferner ein Erstellen der Liste der Gruppe von Fernsehprogrammen aus den Programmführungsdaten aufweist, basierend auf dem Vorhandensein eines Datenflags, das mit Programmen in den Programmführungsdaten in Zusammenhang steht.

50. Verfahren nach Anspruch 46, ferner mit einem Anzeigen eines Informationsschirms bezogen auf die Gruppe von Fernsehprogrammen auf der Benutzereinrichtung (18).

51. Verfahren nach Anspruch 46, ferner mit einem Bereitstellen einer Möglichkeit für den Benutzer die Programm in der Gruppe mit einer einzelnen Auswahl aufzunehmen.

52. Verfahren nach Anspruch 46, ferner mit einem Bereitstellen einer Möglichkeit für den Benutzer Erinnerungen für jedes der Programme in der Gruppe mit einer einzelnen Auswahl zu setzen.

53. Verfahren nach Anspruch 46, ferner mit einem automatischen Setzen einer Erinnerung für jedes der Programme in der Gruppe, wenn der Benutzer ein Interesse an der Gruppe zeigt.

54. Verfahren nach Anspruch 46, wobei die Benutzereinrichtung (18) eine Benutzerfernseheinrichtung (20) ist.

55. Verfahren nach Anspruch 46, wobei die Benutzereinrichtung (18) eine Computereinrichtung (22) ist.

56. Verfahren nach Anspruch 46, ferner mit einem Bereitstellen einer Möglichkeit für den Benutzer ein Lesezeichen für die Gruppe zu setzen.

57. Verfahren nach Anspruch 46, ferner mit einem Bereitstellen einer Möglichkeit für den Benutzer nach Programmen in der Gruppe zu suchen.

58. Verfahren nach Anspruch 46, ferner mit einem Bereitstellen einer Möglichkeit für den Benutzer mindestens eine der Gruppen einem Benutzerprofil hinzuzufügen.

59. Verfahren nach Anspruch 46, wobei die Unterstützung der interaktiven Fernsehprogrammführung ferner ein Unterstützen der interaktiven Fernsehprogrammführung in einer Client-Server Anordnung teilweise auf der Benutzereinrichtung (18) und teilweise auf einem Server (56) aufweist.

## Revendications

1. Système de guide interactif de programmes de télévision comprenant :
une mémoire pour une base de données (30) de données de guide de programmes, dans laquelle la base de données (30) est accessible par un commanditaire (11), une unité de télédistribution (14) et un réseau de communication (34), et
un équipement personnel (18) connecté à l'unité de télédistribution (14) qui reçoit des données de guide de programmes de télévision venant de l'unité de télédistribution (14), dans lequel les données de guide de programmes incluent des listes formant le guide de programmes, et dans lequel l'équipement personnel est configuré pour supporter un guide interactif de programmes de télévision basé sur les listes formant le guide de programmes ; recevoir d'un commanditaire (11) une indication de listes de programmes de télévision commanditées à grouper ; compiler un groupe commandité de listes à partir des listes formant le guide de programmes indiquées, et présenter à un utilisateur de l'équipement personnel (18) un affichage du groupe commandité de listes sur l'équipement personnel (18).

2. Système de guide interactif de programmes de télévision suivant la revendication 1, dans lequel le groupe commandité de listes sont liées à une publicité correspondant au groupe de listes.

3. Système de guide interactif de programmes de télévision suivant la revendication 2, dans lequel la publicité est une publicité interactive.

4. Système de guide interactif de programmes de télévision suivant la revendication 1, dans lequel le système de guide interactif de programmes de télévision sélectionne des programmes de télévision qui feront partie d'un groupe en utilisant une consultation de base de données.

5. Système de guide interactif de programmes de télévision suivant la revendication 1, dans lequel le système de guide interactif de programmes de télévision sélectionne des programmes de télévision qui feront partie d'un groupe sur la base d'une liste prédéfinie de programmes fournie par le commanditaire.

6. Système de guide interactif de programmes de télévision suivant la revendication 1, dans lequel le système de guide interactif de programmes de télévision sélectionne des programmes de télévision qui feront partie d'un groupe sur la base de la présence d'un indicateur de données associé à des programmes dans les données de guide de programmes.

7. Système de guide interactif de programmes de télévision suivant la revendication 1, dans lequel le guide interactif de programmes de télévision est configuré pour afficher un écran d'information se rapportant à au moins un des groupes de programmes de télévision sur l'équipement personnel (18).

8. Système de guide interactif de programmes de télévision suivant la revendication 1, dans lequel le guide interactif de programmes de télévision offre à l'utilisateur la possibilité d'enregistrer en une seule sélection les programmes dans au moins un des groupes.

9. Système de guide interactif de programmes de télévision suivant la revendication 1, dans lequel le guide interactif de programmes de télévision offre à l'utilisateur la possibilité de définir en une seule sélection des rappels pour chacun des programmes dans au moins un des groupes.

10. Système de guide interactif de programmes de télévision suivant la revendication 1, dans lequel le guide interactif de programmes de télévision définit automatiquement un rappel pour chacun des programmes dans au moins un des groupes lorsque l'utilisateur manifeste un intérêt pour ce groupe.

11. Système de guide interactif de programmes de télévision suivant la revendication 1, dans lequel l'équipement personnel (18) est un équipement de télévision personnel (20).

12. Système de guide interactif de programmes de télévision suivant la revendication 1, dans lequel l'équipement personnel (18) est un équipement informatique personnel (22).

13. Système de guide interactif de programmes de télévision suivant la revendication 1, dans lequel le guide interactif de programmes de télévision offre à l'utilisateur la possibilité de définir un signet pour le groupe.

14. Système de guide interactif de programmes de télévision suivant la revendication 1, dans lequel le guide interactif de programmes de télévision offre à l'utilisateur la possibilité de rechercher des programmes dans le groupe.

15. Système de guide interactif de programmes de télévision suivant la revendication 1, dans lequel le guide interactif de programmes de télévision offre à l'utilisateur la possibilité d'ajouter le groupe à un profil de l'utilisateur.

16. Système de guide interactif de programmes de télévision suivant la revendication 1, dans lequel le système de guide interactif de programmes de télévision est mis en oeuvre dans un montage client-serveur.

17. Procédé permettant d'utiliser un guide interactif de programmes de télévision avec des groupes de listes, comprenant les éléments suivants :
la fourniture de programmes de télévision à un équipement personnel (18) à partir d'une unité de télédistribution (14) ;
le support d'un guide interactif de programmes de télévision basé sur des listes formant le guide de programmes au moins partiellement sur l'équipement personnel (18) ;
la fourniture de données de guide de programmes de télévision au guide interactif de programmes de télévision pour affichage sur l'équipement personnel, dans lequel les données de guide de programmes de télévision incluent des listes formant le guide de programmes et l'équipement personnel est configuré pour
recevoir d'un commanditaire (11) une indication de listes de programmes de télévision à grouper ;
compiler un groupe commandité de listes à partir des listes formant le guide de programmes indiquées, et
afficher le groupe commandité de listes sur l'équipement personnel (18).

18. Procédé suivant la revendication 17, dans lequel l'affichage du groupe commandité de listes comprend en outre l'affichage de la liste sur l'équipement personnel (18) lorsque l'utilisateur sélectionne une publicité interactive correspondant au groupe commandité.

19. Procédé suivant la revendication 17, comprenant en outre l'affichage d'un écran d'information se rapportant au groupe de programmes de télévision sur l'équipement personnel (18).

20. Procédé suivant la revendication 17, dans lequel la compilation du groupe commandité de listes comprend en outre la compilation de la liste du groupe de programmes de télévision à partir des données de guide de programmes à l'aide d'une liste prédéfinie de programmes fournie par le commanditaire.

21. Procédé suivant la revendication 17, dans lequel la compilation de la liste comprend en outre la compilation de la liste du groupe de programmes de télévision à partir des données de guide de programmes sur la base de la présence d'un indicateur de données associé à des programmes dans les données de guide de programmes.

22. Procédé suivant la revendication 17, comprenant en outre l'affichage d'un écran d'information se rapportant au groupe de programmes de télévision sur l'équipement personnel.

23. Procédé suivant la revendication 17, comprenant en outre la possibilité pour l'utilisateur d'enregistrer en une seule sélection les programmes dans le groupe.

24. Procédé suivant la revendication 17, comprenant en outre la possibilité pour l'utilisateur de définir en une seule sélection des rappels pour chacun des programmes dans le groupe.

25. Procédé suivant la revendication 17, comprenant en outre la définition automatique d'un rappel pour chacun des programmes dans le groupe lorsque l'utilisateur manifeste un intérêt pour le groupe.

26. Procédé suivant la revendication 17, dans lequel l'équipement personnel (18) est un équipement de télévision personnel (20).

27. Procédé suivant la revendication 17, dans lequel l'équipement personnel (18) est un équipement informatique personnel (22).

28. Procédé suivant la revendication 17, comprenant en outre la possibilité pour l'utilisateur de définir un signet pour le groupe.

29. Procédé suivant la revendication 17, comprenant en outre la possibilité pour l'utilisateur de rechercher des programmes dans le groupe.

30. Procédé suivant la revendication 17, comprenant en outre la possibilité pour l'utilisateur d'ajouter au moins un des groupes à un profil de l'utilisateur.

31. Procédé suivant la revendication 17, dans lequel le support du guide interactif de programmes de télévision comprend en outre le support du guide interactif de programmes de télévision dans un montage client-serveur partiellement sur l'équipement personnel (18) et partiellement sur un serveur (56).

32. Système de guide interactif de programmes de télévision suivant la revendication 1, dans lequel l'utilisateur se voit offrir la possibilité de voir une liste de programmes de télévision dans un groupe qui sont arbitrairement sélectionnés par un commanditaire en sélectionnant une publicité interactive correspondant au groupe.

33. Système de guide interactif de programmes de télévision suivant la revendication 32, dans lequel l'équipement personnel (18) sélectionne des programmes de télévision qui feront partie du groupe en utilisant une consultation de base de données.

34. Système de guide interactif de programmes de télévision suivant la revendication 32, dans lequel l'équipement personnel (18) sélectionne des programmes de télévision qui feront partie du groupe sur la base d'une liste prédéfinie de programmes fournie par le commanditaire.

35. Système de guide interactif de programmes de télévision suivant la revendication 32, dans lequel l'équipement personnel (18) sélectionne des programmes de télévision qui feront partie du groupe sur la base de la présence d'un indicateur de données associé à des programmes dans les données de guide de programmes.

36. Système de guide interactif de programmes de télévision suivant la revendication 32, dans lequel le guide interactif de programmes de télévision est configuré pour afficher un écran d'information se rapportant au groupe de programmes de télévision sur l'équipement personnel (18).

37. Système de guide interactif de programmes de télévision suivant la revendication 32, dans lequel le guide interactif de programmes de télévision offre à l'utilisateur la possibilité d'enregistrer en une seule sélection les programmes dans le groupe.

38. Système de guide interactif de programmes de télévision suivant la revendication 32, dans lequel le guide interactif de programmes de télévision offre à l'utilisateur la possibilité de définir en une seule sélection des rappels pour chacun des programmes dans le groupe.

39. Système de guide interactif de programmes de télévision suivant la revendication 32, dans lequel le guide interactif de programmes de télévision définit automatiquement un rappel pour chacun des programmes dans le groupe lorsque l'utilisateur manifeste un intérêt pour ce groupe.

40. Système de guide interactif de programmes de télévision suivant la revendication 32, dans lequel l'équipement personnel (18) est un équipement de télévision personnel (20).

41. Système de guide interactif de programmes de télévision suivant la revendication 32, dans lequel l'équipement personnel (18) est un équipement informatique personnel (22).

42. Système de guide interactif de programmes de télévision suivant la revendication 32, dans lequel le guide interactif de programmes de télévision offre à l'utilisateur la possibilité de définir un signet pour le groupe.

43. Système de guide interactif de programmes de télévision suivant la revendication 32, dans lequel le guide interactif de programmes de télévision offre à l'utilisateur la possibilité de rechercher des programmes dans le groupe.

44. Système de guide interactif de programmes de télévision suivant la revendication 32, dans lequel le guide interactif de programmes de télévision offre à l'utilisateur la possibilité d'ajouter le groupe à un profil de l'utilisateur.

45. Système de guide interactif de programmes de télévision suivant la revendication 32, dans lequel le système de guide interactif de programmes de télévision est mis en oeuvre dans un montage client-serveur.

46. Procédé permettant d'utiliser un guide interactif de programmes de télévision avec des groupes de listes suivant la revendication 17, comprenant l'affichage de la liste sur l'équipement personnel (18) lors de la sélection par l'utilisateur d'une publicité interactive correspondant au groupe de listes de programmes de télévision.

47. Procédé suivant la revendication 46, dans lequel la compilation de la liste comprend en outre la compilation de la liste du groupe de programmes de télévision à partir des données de guide de programmes en utilisant une consultation de base de données.

48. Procédé suivant la revendication 46, dans lequel la compilation de la liste comprend en outre la compilation de la liste du groupe de programmes de télévision à partir des données de guide de programmes à l'aide d'une liste prédéfinie de programmes fournie par le commanditaire.

49. Procédé suivant la revendication 46, dans lequel la compilation de la liste comprend en outre la compilation de la liste du groupe de programmes de télévision à partir des données de guide de programmes sur la base de la présence d'un indicateur de données associé à des programmes dans les données de guide de programmes.

50. Procédé suivant la revendication 46, comprenant en outre l'affichage d'un écran d'information se rapportant au groupe de programmes de télévision sur l'équipement personnel (18).

51. Procédé suivant la revendication 46, comprenant en outre la possibilité pour l'utilisateur d'enregistrer en une seule sélection les programmes dans le groupe.

52. Procédé suivant la revendication 46, comprenant en outre la possibilité pour l'utilisateur de définir en une seule sélection des rappels pour chacun des programmes dans le groupe.

53. Procédé suivant la revendication 46, comprenant en outre la définition automatique d'un rappel pour chacun des programmes dans le groupe lorsque l'utilisateur manifeste un intérêt pour le groupe.

54. Procédé suivant la revendication 46, dans lequel l'équipement personnel (18) est un équipement de télévision personnel (20).

55. Procédé suivant la revendication 46, dans lequel l'équipement personnel (18) est un équipement informatique personnel (22).

56. Procédé suivant la revendication 46, comprenant en outre la possibilité pour l'utilisateur de définir un signet pour le groupe.

57. Procédé suivant la revendication 46, comprenant en outre la possibilité pour l'utilisateur de rechercher des programmes dans le groupe.

58. Procédé suivant la revendication 46, comprenant en outre la possibilité pour l'utilisateur d'ajouter au moins un des groupes à un profil de l'utilisateur.

59. Procédé suivant la revendication 46, dans lequel le support du guide interactif de programmes de télévision comprend en outre le support du guide interactif de programmes de télévision dans un montage client-serveur partiellement sur l'équipement personnel (18) et partiellement sur un serveur (56).
